# EUROPÄISCHE PATENTSCHRIFT

(11) **EP 0 601 333 B1**
(45) Veröffentlichungstag und Bekanntmachung des Hinweises auf die Patenterteilung: **05.02.1997**
(21) Anmeldenummer: 93117868.5
(22) Anmeldetag: 04.11.1993
(51) Int. Cl.: H02H 7/18, B60R 16/02

(54) **Anordnung zum automatischen Abschalten eines Autoradios**
Device for automatically switching off a car radio
Dispositif pour débrancher automatiquement un autoradio

(30) Priorität: 05.12.1992 DE 4241012
(43) Veröffentlichungstag der Anmeldung: 15.06.1994
(73) Patentinhaber: Blaupunkt-Werke GmbH, D-31139 Hildesheim (DE)
(72) Erfinder: Wermuth, Jürgen, D-31228 Peine (DE); Spelter, Michael, D-31139 Hildesheim (DE); Moschner, Jörg, D-31185 Hoheneggelsen (DE)

(56) Entgegenhaltungen:
- WO-A-90/06614
- DE-A- 3 642 996
- DE-C- 3 936 638
- US-A- 4 950 913
- US-A- 5 159 257

## Beschreibung

Die Erfindung betrifft eine Anordnung zum automatischen Abschalten eines in einem Kraftfahrzeug betriebenen Autoradios nach dem Oberbegriff des Patentanspruchs 1 bzw. nach dem Oberbegriff des Anspruchs 2. Eine derartige, aus der DE 36 42 996 A1 bekannte Anordnung dient dazu, ein Autoradio, welches an einer ständig Spannung führenden Batterieklemme und an einer Klemme, bei der die Stromzufuhr durch das Zündschloß des Kraftfahrzeugs unterbrochen werden kann, angeschlossen ist, nach einer Unterbrechung der Stromzufuhr über das Zündschloß für eine vorgebbare Zeit zu betreiben. Hierdurch wird ein durch vergessenes Abschalten bedingtes Entladen der Fahrzeugbatterie begrenzt.

Aus der DE 39 36 638 C1 ist ein Verfahren zur Sicherung der elektrischen Energieversorgung in einem Kraftfahrzeug bekannt, bei dem der Ladezustand der Kraftfahrzeugbatterie beispielsweise durch Messen der Klemmenspannung bestimmt wird. Der Ladezustand wird hierbei mit einem Mikroprozessor überwacht, welcher die Leistungsaufnahme elektrischer Verbraucher des Kraftfahrzeuges entsprechend ihrer Wichtigkeit reduziert.

In der US-A 4 950 913 ist eine Schaltungsanordnung zum automatischen Abschalten eines Autoradios beschrieben, wobei das Autoradio nach Abstellen des Fahrzeugmotors für eine von einem mit Abstellen des Motors gestarteten Timer bestimmte Zeit mit Betriebsspannung versorgt wird. Bei übermäßiger Entladung der Batterie, die über eine Spannungsüberwachung und eine Überstromerkennung detektiert wird, wird die Energieversorgung des Autoradios vorzeitig unterbrochen.

Die mit der Erfindung erzielten Vorteile bestehen darin, daß mit der Anordnung nach Anspruch 1 bzw. mit der Anordnung nach Anspruch 2 die zur Wiedergabe dienenden elektrischen Komponenten des Autoradios automatisch abgeschaltet werden, bevor eine zum Starten des Kraftfahrzeugmotors erforderliche Ladungskapazität der Batterie unterschritten wird (Anspruch 2), wobei durch Einbeziehung eines Temperaturfühlers die Erfassung des Ladezustandes der Batterie verbessert wird (Anspruch 1). Die Abschätzung des Ladezustandes erfolgt damit zuverlässiger als anhand einer reinen Spannungs- oder Strommessung.

Vorteilhafte Ausgestaltungen der Erfindung sind in den Unteransprüchen angegeben. So ist nach Anspruch 5 bei Unterschreiten eines vorgegebenen Ladungskapazitätspegels der Fahrzeugbatterie die durch die Zeitschaltung vorgegebene Einschaltdauer des Autoradios verkürzt. Nach Anspruch 6 sind externe mit dem Autoradio verbundene Wiedergabekomponenten zusammen mit dem Autoradio ein- und ausschaltbar, womit verhindert wird, daß zwar das Autoradio ausgeschaltet wird, jedoch an das Radio ansgeschlossene Wiedergabekomponenten die Batterie weiterhin belasten. Besonders vorteilhaft ist die Verwendung von Mikroprozessoren bei Anordnungen nach den Ansprüchen 7, 8 und 9, da Mikroprozessoren ohnehin in den meisten heutigen Autoradios vorhanden sind und mit Hilfe der Mikroprozessoren die beschriebenen Steuerungsaufgaben in Form einfacher Programme auf einfache Weise darstellbar sind.

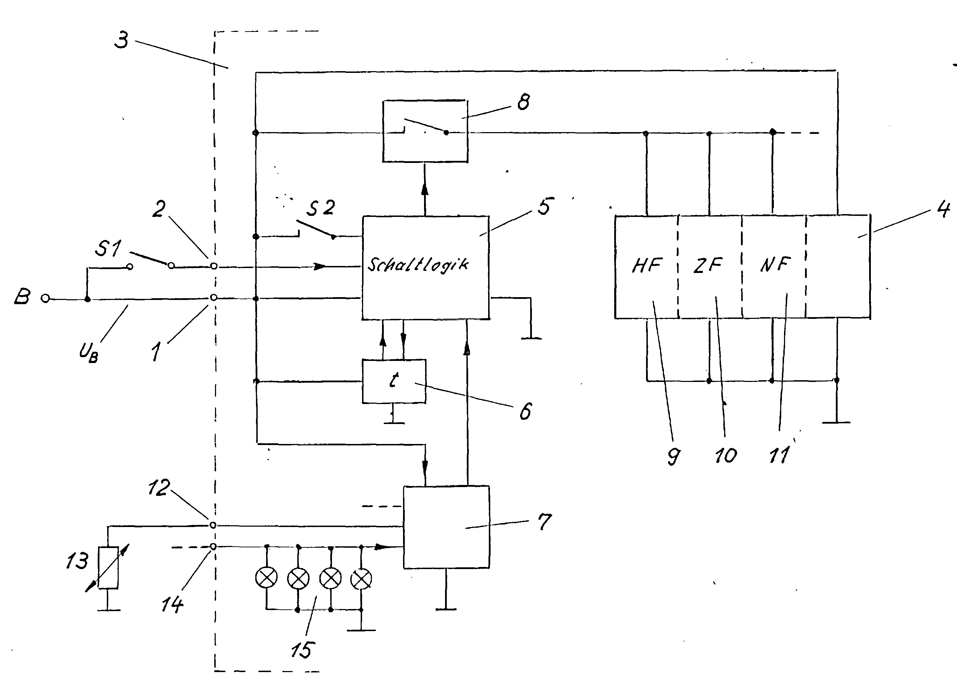

Ein Ausführungsbeispiel der Erfindung ist als Blockschaltbild in der Zeichnung dargestellt und wird im folgenden näher erläutert.

Eine ständig Spannung U_{B} führende sogenannte Dauerplus-Klemme B ist mit einer Batterieklemme 1 sowie über einen Kraftfahrzeugzündschloßschalter S1 mit einer Schaltspannungsklemme 2 eines Autoradios 3 verbunden. Über die Batterieklemme 1 wird die ständig anliegende Spannung U_{B} einem Geräteschalter S2, einem elektrischen Speicher 4, einer Schaltlogik 5, einer Zeitschaltung 6 und einem als Schaltungsanordnung zur Überwachung des Ladezustandes der Fahrzeugbatterie vorgesehenen Mikroprozessor 7 zugeführt, der den Ladezustand aus der Ratteriespannung U_{B} ableitet. Die mit der Zeitschaltung 6 und dem Mikroprozessor 7 verknüpfte Schaltlogik 5 steuert eine Schalteinrichtung 8, über welche zur Wiedergabe dienende interne und externe elektrische Komponenten 9, 10, 11, wie HF-, ZF- und NF-Stufen, mit der Batterieklemme 1 verbunden werden können. Ein zweiter Eingang des Mikroprozessors 7 ist mit einer ersten Anschlußklemme 12 für einen Temperaturfühler 13 verbunden. Ein dritter Eingang des Mikroprozessors 7 ist mit einer zweiten Anschlußklemme 14 verbunden, über welche die Beleuchtungselemente 15 des Autoradios 3 separat mit Strom versorgt werden können.

Bei eingeschaltetem Zündschloßschalter S1 und eingeschaltetem Geräteschalter S2 verbindet die von der aus einem Mikroprozessor bestehenden Schaltlogik 5 gesteuerte Schalteinrichtung 8 die elektrischen Komponenten 9, 10, 11 mit der die Spannung U_{B} führenden Batterieklemme 1. Das Autoradio 3 befindet sich somit im Betriebszustand. Wird nun der Zündschloßschalter S1 ausgeschaltet, wie es beispielsweise bei abgezogenem Zündschlüssel der Fall ist, so geht der Spannungspegel an der Schaltspannungsklemme 2 von "High" auf "Low". Dieses veranlaßt die Schaltlogik 5, die Zeltschaltung 6 zu aktivieren und die Schalteinrichtung 8 für eine vorgegebene begrenzte Zeitdauer im durchgeschalteten Zustand zu belassen. Ein im Kraftfahrzeug verbliebener Insasse hat somit die Möglichkeit, während der vorgegebenen Zeitdauer das Autoradio weiterhin spielen zu lassen. Sinkt nun während dieser vorgegebenen Zeitdauer die Ladungskapazität der Kraftfahrzeugbatterie unter einen vorgegebenen Schwellwertpegel, so steuert der zur Überwachung des Ladezustandes dienende Mikroprozessor 7 über die Schaltlogik 5 die Schalteinrichtung 8 derart an, daß sie die Stromversorgung der elektrischen Komponenten 9, 10, 11 vorzeitig unterbricht. Der Mikroprozessor 7 kann aber auch direkt auf die Zeitschaltung 6 einwirken und die vorgegebene Zeitdauer verkürzen. Da der Ladungszustand der Batterie auch von der Temperatur der Batterie abhängig ist, kann dieser Einfluß durch den in der Umgebung der Batterie angeordneten Temperaturfühler 13 berücksichtigt werden.

Der für ein Abschalten der elektrischen Komponenten 9, 10, 11 erforderliche Schwellwertpegel für die Ladungskapazität ist so gewählt, daß er eine für ein Starten des Kraftfahrzeug-Motors ausreichende Kapazitätsreserve gewährleistet.

Da ein mit eingeschaltetem Standlicht abgestelltes Kraftfahrzeug eine zusätzliche Entladung der Batterie bewirkt, ist es zur Schonung der Batterie zweckmäßig, erfindungsgemäß den Referenzpegel für die Ladungskapazität bei dieser zusätzlichen Batteriebelastung anzuheben. Hierzu wird die mit dem Stromkreis für die Armaturenbeleuchtung des Kraftfahrzeugs verbindbare zweite Anschlußklemme 14, an der auch die Gerätebeleuchtungselemente 15 angeschlossen sind, auf das Vorhandensein oder Nichtvorhandensein einer Spannung überwacht. Ist eine solche, von außen zugeführte Spannung vorhanden, dann kann in den überwiegenden Fällen von einem eingeschalteten Standlicht ausgegangen werden und diesem eine höhere Priorität eingeräumt werden.

## Patentansprüche

1. Anordnung zum automatischen Abschalten eines in einem Kraftfahrzeug betriebenen Autoradios,
wobei das Autoradio in Abhängigkeit von einem den Stillstand des Motors anzeigenden Schaltsignal für eine vorgegebene Zeitdauer betreibbar ist,
wobei eine mit dem Ausgang des Signalgebers verbundene Schaltlogik (5) mit Zeitschaltung (6) zur Steuerung einer Schalteinrichtung (8) vorgesehen ist,
und wobei eine mit der Zeitschaltung (6) und/oder der Schaltlogik (5) verbundene Schaltungsanordnung (5) vorgesehen ist, die beim Unterschreiten eines vorgegebenen, aus der Batteriespannung abgeleiteten Ladungskapazitätspegels der Fahrzeugbatterie ein vorzeitiges Abschalten von zur Wiedergabe dienenden Komponenten des Autoradios innerhalb der von der Zeitschaltung vorgegebenen Zeitdauer bewirkt,
**dadurch gekennzeichnet,**
daß das Zündschloß (S1) des Kraftfahrzeuges das Schaltsignal erzeugt, daß das Schaltsignal die an der Schaltspannungsklemme (2) des Zündschlosses abgreifbare Spannung ist,
und daß die Schaltungsanordnung (7) zur Überwachung des Ladezustandes der Fahrzeugbatterie über eine erste Anschlußklemme (12) zusätzlich mit einem zur Auswertung der Batterietemperatur vorgesehenen Temperaturfühler (13) verbindbar ist.

2. Anordnung zum automatischen Abschalten eines in einem Kraftfahrzeug betriebenen Autoradios,
wobei das Autoradio in Abhängigkeit von einem den Stillstand des Motors anzeigenden Schaltsignal für eine vorgegebene Zeitdauer betreibbar ist,
wobei eine mit dem Ausgang des Signalgebers verbundene Schaltlogik (5) mit Zeitschaltung (6) zur Steuerung einer Schalteinrichtung (8) vorgesehen ist,
und wobei eine mit der Zeitschaltung und/oder der Schaltlogik (5) verbundene Schaltungsanordnung (7) vorgesehen ist, die beim Unterschreiten eines vorgegebenen, aus der Batteriespannung abgeleiteten Ladungskapazitätspegels der Fahrzeugbatterie ein vorzeitiges Abschalten von zur Wiedergabe dienenden Komponenten des Autoradios innerhalb der von der Zeitschaltung vorgegebenen Zeitdauer bewirkt,
**dadurch gekennzeichnet,**
daß das Zündschloß (S1) des Kraftfahrzeuges das Schaltsignal erzeugt, daß das Schaltsignal die an der Schaltspannungsklemme (2) des Zündschlosses abgreifbare Spannung ist,
daß die Schaltungsanordnung (7) zur Überwachung des Ladezustandes der Fahrzeugbatterie mit einer zweiten Anschlußklemme (14) für einen separaten Beleuchtungsstromkreis für die Gerätebeleuchtung (15) verbunden ist,
und daß die Schaltungsanordnung (7) derart bemessen ist, daß bei eingeschalteter Beleuchtung der vorgegebene Ladungskapazitätspegel angehoben ist.

3. Anordnung nach Anspruch 1,
**dadurch gekennzeichnet,**
daß die Schaltungsanordnung (7) zur Überwachung des Ladezustandes der Fahrzeugbatterie mit einer zweiten Anschlußklemme (14) für einen separaten Beleuchtungsstromkreis für die Gerätebeleuchtung (15) verbunden ist, und daß die Schaltungsanordnung (7) derart bemessen ist, daß bei eingeschalteter Beleuchtung der vorgegebene Ladungskapazitätspegel angehoben ist.

4. Anordnung nach Anspruch 2,
**dadurch gekennzeichnet,**
daß die Schaltungsanordnung (7) zur Überwachung des Ladezustandes der Fahrzeugbatterie über eine erste Anschlußklemme (12) zusätzlich mit einem zur Auswertung der Batterietemperatur vorgesehenen Temperaturfühler (13) verbindbar ist.

5. Anordnung nach einem der Ansprüche 1 bis 4,
**dadurch gekennzeichnet,**
daß bei Unterschreitung des vorgegebenen Ladungskapazitätspegels der Fahrzeugbatterie die durch die Zeitschaltung vorgegebene Zeitdauer zum Betrieb des Autoradios verkürzt ist.

6. Anordnung nach einem der Ansprüche 1 bis 5,
**dadurch gekennzeichnet,**
daß an das Autoradio externe der Wiedergabe und/oder der Beeinflussung der Wiedergabe dienende Komponenten angeschlossen sind, die zusammen mit dem Autoradio ein- und ausschaltbar sind.

7. Anordnung nach einem der Ansprüche 1 bis 6,
**dadurch gekennzeichnet,**
daß als Schaltlogik (5) ein Mikroprozessor vorgesehen ist.

8. Anordnung nach einem der Ansprüche 1 bis 7,
**dadurch gekennzeichnet,**
daß als Schaltungsanordnung (7) zur Überwachung des Ladezustandes der Fahrzeugbatterie ein Mikroprozessor vorgesehen ist.

9. Anordnung nach einem der Ansprüche 1 bis 6,
**dadurch gekennzeichnet,**
daß als Schaltlogik (5) und als Schaltungsanordnung (7) zur Überwachung des Ladezustandes der Fahrzeugbatterie ein gemeinsamer Mikroprozessor vorgesehen ist.

## Claims

1. Arrangement for automatically switching off a car radio operated in a motor vehicle,
it being possible for the car radio to be operated for a prescribed time period as a function of a switching signal which indicates the stationary state of the engine,
a switching logic (5) which is connected to the output of the signal transmitter being provided with a timer circuit (6) for controlling a switching device (8),
and a circuit arrangement (7) which is connected to the timer circuit (6) and/or to the switching logic (5) being provided, which circuit arrangement (7) brings about, within the timer period prescribed by the timer circuit, premature switching off of components of the car radio which serve for reproduction, when the vehicle-battery charge capacity level derived from the battery voltage drops below a prescribed value,
characterized
in that the ignition lock (S1) of the motor vehicle generates the switching signal, in that the switching signal is the voltage which can be tapped at the switching voltage terminal (2) of the ignition lock,
and in that, in order to monitor the charge state of the vehicle battery, the circuit arrangement (7) can be additionally connected via a first terminal (12) to a temperature sensor (13) provided for evaluating the temperature of the battery.

2. Arrangement for automatically switching off a car radio operated in a motor vehicle,
it being possible for the car radio to be operated for a prescribed time period as a function of a switching signal which indicates the stationary state of the engine,
a switching logic (5) which is connected to the output of the signal transmitter being provided with a timer circuit (6) for controlling a switching device (8),
and a circuit arrangement (7) which is connected to the timer circuit (6) and/or to the switching logic (5) being provided, which circuit arrangement (7) brings about, within the timer period prescribed by the timer circuit, premature switching off of components of the car radio which serve for reproduction, when the vehicle-battery charge capacity level derived from the battery voltage drops below a prescribed value,
characterized
in that the ignition lock (S1) of the motor vehicle generates the switching signal, in that the switching signal is the voltage which can be tapped at the switching voltage terminal (2) of the ignition lock,
in that, in order to monitor the charge state of the vehicle battery, the circuit arrangement (7) is connected to a second terminal (14) for a separate lighting circuit for the equipment lighting means (15), and in that the circuit arrangement (7) is dimensioned such that the prescribed charge capacity level is raised when the lighting means is switched on.

3. Arrangement according to Claim 1, characterized in that, in order to monitor the charge state of the vehicle battery, the circuit arrangement (7) is connected to a second terminal (14) for a separate lighting circuit for the equipment lighting means (15), and in that the circuit arrangement (7) is dimensioned such that the prescribed charge capacity level is raised when the lighting means is switched on.

4. Arrangement according to Claim 2, characterized in that, in order to monitor the charge state of the vehicle battery, the circuit arrangement (7) can be additionally connected via a first terminal (12) to a temperature sensor (13) provided for evaluating the temperature of the battery.

5. Arrangement according to one of Claims 1 to 4, characterized in that the time period prescribed by the timer circuit, for the operation of the car radio, is shortened when the charge capacity level of the vehicle battery drops below the prescribed value.

6. Arrangement according to one of Claims 1 to 5, characterized in that external components which serve for reproduction and/or influencing of the reproduction are connected to the car radio, which components can be switched on and off together with the car radio.

7. Arrangement according to one of Claims 1 to 6, characterized in that a microprocessor is provided as switching logic (5).

8. Arrangement according to one of Claims 1 to 7, characterized in that a microprocessor is provided as circuit arrangement (7) for monitoring the charge state of the vehicle battery.

9. Arrangement according to one of Claims 1 to 6, characterized in that a common microprocessor is provided as switching logic (5) and as circuit arrangement (7) for monitoring the charge state of the vehicle battery.

## Revendications

1. Dispositif pour couper automatiquement un autoradio d'un véhicule automobile,
l'autoradio pouvant fonctionner pendant une durée prédéterminée suivant un signal de commutation déduit de l'arrêt du moteur,
une logique de commutation (5) reliée à la sortie du générateur de signaux étant prévue avec un circuit d'horloge (6) pour commander une installation de commutation (8),
et un circuit de commutation (7) relié au circuit d'horloge (6) et/ou à la logique de commutation (5), circuit (5) qui, en cas de dépassement vers le bas d'un niveau de capacité de charge prédéterminé, déduit de la tension de la batterie, produit une coupure prématurée des composants servant à la reproduction sonore de l'autoradio à l'intérieur de la durée prédéterminée par le circuit d'horloge,
caractérisé en ce que
la clé de contact (S1) du véhicule automobile génère le signal de commutation qui est la tension recueillie sur les bornes de tension de commutation (2) de la clé de contact,
et le circuit de commutation (7) est relié, pour surveiller l'état de charge de la batterie du véhicule, par l'intermédiaire d'une première borne de branchement (12), en plus à un capteur de température (13) pour exploiter la température de la batterie.

2. Dispositif pour couper automatiquement un autoradio d'un véhicule automobile,
l'autoradio continuant de fonctionner pendant une durée prédéterminée suivant un signal de commutation indiquant l'état d'arrêt du moteur,
une logique de commutation (5) reliée à la sortie du générateur de signal étant prévue avec un circuit d'horloge (6) pour commander une installation de commutation (8),
et un circuit de commutation (7) est relié au circuit d'horloge et/ou analogique de commutation (5), circuit (7) qui, lors du dépassement vers le bas d'un niveau de capacité de charge prédéterminé, déduit de la tension de la batterie, pour la batterie du véhicule, produit une coupure prématurée des composants de l'autoradio servant à la reproduction du son, à l'intérieur de la durée prédéterminée par le circuit d'horloge,
caractérisé en ce que
la clé de contact (S1) du véhicule automobile génère le signal de commutation qui est la tension prise aux bornes de tension de commutation (2) de la clé de contact,
le circuit de commutation (7) pour surveiller l'état de charge de la batterie du véhicule étant relié à une seconde borne (14) d'un circuit d'éclairage séparé pour l'éclairage (15) des appareils, et
le circuit de commutation (7) est dimensionné pour que, lorsque l'éclairage est branché, le niveau prédéterminé de la capacité de charge soit relevé.

3. Dispositif selon la revendication 1,
caractérisé en ce que
le dispositif de commutation (7) pour surveiller l'état de charge de la batterie du véhicule est relié à une seconde borne de branchement (14) d'un circuit d'éclairage séparé pour l'éclairage des appareils (15) et le circuit de commutation (7) est dimensionné pour que, lorsque l'éclairage est branché, le niveau prédéterminé de la capacité de charge soit relevé.

4. Dispositif selon la revendication 2,
caractérisé en ce que
le dispositif de commutation (7) pour surveiller l'état de charge de la batterie du véhicule est relié, par une première borne (12), en plus à un capteur de température (13) prévu pour exploiter la température de la batterie.

5. Dispositif selon l'une des revendications 1 à 4,
caractérisé en ce que
en cas de dépassement vers le bas du niveau de capacité de charge, prédéterminé, de la batterie du véhicule, la durée prédéterminée par le circuit d'horloge pour le fonctionnement de l'autoradio est réduite.

6. Dispositif selon l'une des revendications 1 à 5,
caractérisé en ce que
les composants servant à la reproduction sonore externe et/ou à influencer la reproduction sonore de l'autoradio, peuvent être branchés et coupés en même temps que l'autoradio.

7. Dispositif selon l'une des revendications 1 à 6,
caractérisé en ce que
la logique de commutation (5) est un microprocesseur.

8. Dispositif selon l'une des revendications 1 à 7,
caractérisé en ce que
le circuit de commutation (7) pour surveiller l'état de charge de la batterie du véhicule est un microprocesseur.

9. Dispositif selon l'une des revendications 1 à 6,
caractérisé en ce que
la logique de commutation (5) et le circuit de commutation (7), pour surveiller l'état de charge de la batterie du véhicule, sont constitués par un même microprocesseur.
